(19) Europäisches Patentamt / European Patent Office / Office européen des brevets

(11) **EP 2 838 752 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(51) Int Cl.:
***B60L 5/00*** *(2006.01)*      ***B60L 3/04*** *(2006.01)*
***G01K 1/14*** *(2006.01)*      ***G01K 7/42*** *(2006.01)*

(21) Anmeldenummer: **12805955.7**

(22) Anmeldetag: **26.11.2012**

(86) Internationale Anmeldenummer:
**PCT/EP2012/073615**

(87) Internationale Veröffentlichungsnummer:
**WO 2013/156093 (24.10.2013 Gazette 2013/43)**

(54) **VERFAHREN UND EINRICHTUNG ZUR STROMABNEHMERAUSFALLÜBERWACHUNG**

METHOD AND DEVICE FOR MONITORING PANTOGRAPH FAILURE

PROCEDE ET DISPOSITIF DE DÉTECTION DE DÉFAILLANCE DE PANTOGRAPHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2012 AT 501382012**

(43) Veröffentlichungstag der Anmeldung:
**25.02.2015 Patentblatt 2015/09**

(73) Patentinhaber: **Siemens AG Österreich 1210 Wien (AT)**

(72) Erfinder:
• **JAKOBSEN, Einar
91334 Hemhofen (DE)**
• **MAIER, Markus
90425 Nürnberg (DE)**
• **PIRNER, Stefan
91224 Pommelsbrunn (DE)**
• **REBEC, Heribert
A-2491 Neufeld an der Leitha (AT)**
• **ULREICH, Klaus
A-7423 Pinkafeld (AT)**

(74) Vertreter: **Maier, Daniel Oliver
Siemens AG
Postfach 22 16 34
80506 München (DE)**

(56) Entgegenhaltungen:
**EP-A2- 1 947 465     GB-A- 2 475 703
GB-A- 2 476 497     JP-A- H05 223 649
JP-A- 2005 253 232     JP-A- 2009 147 052**

## Beschreibung

## Technisches Gebiet

Die Erfindung betrifft ein Verfahren zur Stromabnehmerausfallüberwachung in Schienenfahrzeugen sowie eine dafür ausgebildete Einrichtung.

## Stand der Technik

Die Zuführung elektrischer Energie zu Schienenfahrzeugen erfolgt über am Dach des Schienenfahrzeugs angeordnete Pantographen oder über Stromabnehmer im Fahrgestellbereich. Letztere sind häufig bei U-Bahnen im Einsatz. Bei Fahrzeugen mit Stromabnehmern im Fahrgestellbereich sind sehr häufig mehrere dieser Stromabnehmer vorgesehen, da einerseits die elektrische Leistung dadurch verteilt wird und die einzelnen Stromabnehmer jeweils eine geringere Leistung übertragen müssen, andererseits ist es wegen der im Allgemeinen unterbrechungsbehafteten Stromschiene ("3. Schiene") erforderliche mehrere Stromaufnahmestellen vorzusehen um diese Lücken überbrücken zu können, sodass ein Fahrzeug auf der gesamten Strecke elektrisch versorgt wird. Dadurch kann ein Fahrzeug auch weiterbetrieben werden, wenn ein Stromabnehmer fehlt (beispielsweise abgebrochen oder anderwärtig beschädigt ist). Dabei wird die elektrische Energie über die verbleibenden Stromabnehmer zugeführt. Dieser Betriebszustand ist für die elektrischen Einrichtungen, insbesondere die Leitungen von den Stromabnehmern zu der Sammelschiene nachteilig, da sie einer dauerhaft erhöhten Belastung ausgesetzt sind. Dem Fahrpersonal ist dieser Betriebszustand nicht ohne Weiteres ersichtlich, da sich die Fahreigenschaften dadurch nicht ändern. Eine Möglichkeit, diesen Betriebszustand zu erkennen besteht darin, in den jeweiligen Leitungen von einem Stromabnehmer zu einer Sammelschiene einen Stromwandler vorzusehen, wodurch ein Ausfall eines Stromabnehmers erkennbar wird. Diese Lösung ist nachteilig, da für diesen Zweck geeignete Stromwandler sehr teuer sind und an einer Stelle im Wagenkasten eingebaut werden müssen, die dafür oftmals zu wenig Platz bietet.

Eine weitere Möglichkeit, diesen Betriebszustand zu erkennen besteht darin, am Stromabnehmer selbst einen Endlagenschalter anzubringen und auszuwerten, wodurch erkannt wird, ob der Stromabnehmer an der Stromschiene anliegt. Diese Lösung ist nachteilig, da sich in der Praxis die Endlagenschalter in der rauen Fahrzeugumgebung als nicht zuverlässig genug herausgestellt haben.

Das Dokument GB2476497A offenbart ein Verfahren und ein Schienenfahrzeug nach dem Stand der Technik.

## Darstellung der Erfindung

Der Erfindung liegt daher die Aufgabe zugrunde, den Ausfall eines Stromabnehmers eines Schienenfahrzeugs, insbesondere einer U-Bahn erkennen zu können.

Die Aufgabe wird durch ein Verfahren mit den Merkmalen des Anspruchs 1 und ein Schienenfahrzeug nach Anspruch 6 gelöst. Vorteilhafte Ausgestaltungen sind Gegenstand untergeordneter Ansprüche.

Dem Grundgedanken der Erfindung nach wird ein Verfahren zur Stromabnehmerausfallüberwachung beschrieben, welches vorzugsweise in einem Schienenfahrzeugverbund aus mindestens einem Schienenfahrzeug, umfassend mehrere Stromabnehmer und elektrische Leitungen von den Stromabnehmern zu einer wagenkastenseitigen Sammelschiene, anwendbar ist und welches folgende Verfahrensschritte umfasst:

- die Oberflächentemperatur mindestens einer elektrischen Leitung von einem Stromabnehmer zu der wagenkastenseitigen Sammelschiene ermitteln,
- ein dieser Temperatur entsprechendes elektrisches Signal an eine Wagensteuerung leiten,
- vergleichen der Temperaturen der ihr zugeordneten Meßstellen durch die Wagensteuerung,
- erkennen eines Ausfalls eines Stromabnehmers durch das Auftreten einer Temperaturdifferenz zwischen den Meßstellen der betroffenen zu den nichtbetroffenen Stromabnehmern.

Dadurch ist der Vorteil erzielbar, eine einfache und äußerst preisgünstig realisierbare Stromabnehmerausfallserkennung umsetzen zu können, wobei der wesentliche Vorteil gegenständlicher Erfindung in dem Entfall jeglicher Stromwandler in den Leitungen von den Stromabnehmern zu der wagenkastenseitigen Sammelschiene sowie im Wegfall der fehleranfälligen und wartungsintensiven Stromabnehmerendlagenschalter liegt.

In weiterer Fortbildung der Erfindung ist neben der Temperaturdifferenz an den Meßstellen auch die zeitliche Veränderung der Temperatur an diesen Meßstellen für die Stromabnehmerausfallerkennung heranzuziehen. Bei identischen Antriebsleistungen je Teilzug (mit je einer Meßstelle) ist im Betrieb ein identischer Temperaturverlauf zu erwarten. Im Störungsfall stellen sich unterschiedliche zeitliche Temperaturgradienten an den Meßstellen ein, wodurch ein Stromabnehmerausfall schon vor dem Erreichen jener Temperaturdifferenz, die als Schaltschwelle zur Erkennung eines Ausfalls bestimmt wurde, erkannt werden kann.

Dabei wird für jede Meßstelle die Differenz der Momentantemperatur zu der Temperatur vor einem bestimmten Zeitraum der gleichen Meßstelle ermittelt und diese Temperaturänderungsgeschwindigkeiten der Meßstellen verglichen. Der bestimmte Zeitraum ist von den thermischen Zeitkonstanten der elektrischen Leitungen beeinflusst und kann empirisch festgelegt werden.

Umfasst der Schienenfahrzeugverbund zwei Teilzüge, bzw. zwei einzelne Schienenfahrzeuge, so kann das Verfahren vereinfacht durchgeführt werden, wobei je Teilzug nur eine Meßstelle vorzusehen ist. Es wird vorausgesetzt, dass der Schienenfahrzeugverbund aus jeweils identisch aufgebauten Fahrzeugen mit jeweils gleichen Antriebsleistungen aufgebaut ist. Dabei ist je Teilzug nur an einer Leitung von einem Stromabnehmer zu einer wagenkastenseitigen Sammelschiene eine Temperaturmessung vorzunehmen, wodurch der Aufwand zur Umsetzung des Verfahrens wesentlich vereinfacht wird. Da die miteinander gekoppelten Teilzüge dieselben elektrischen Antriebsleistungen aufweisen, ist bei unbeschädigten Stromabnehmern auch eine Gleichverteilung der Temperaturen der Leitungen von den Stromabnehmern zu einer wagenkastenseitigen Sammelschiene zu erwarten. Solcherart ist eine Messung an allen diesen Leitungen nicht erforderlich, die Information, ob ein Stromabnehmer beschädigt ist, kann aus dem Vergleich oder dem zeitlichen Verlauf der Temperaturen der beiden Meßstellen (je eine pro Teilzug) erlangt werden. Da die Antriebsleistung auch bei Beschädigung eines (von mehreren) Stromabnehmern im Wesentlichen konstant gegenüber dem unbeschädigten Fall verbleibt, müssen über die unbeschädigten Stromabnehmer höhere Ströme fließen welche solcherart eine Temperaturerhöhung der Sammelschiene und der zuführenden Leitungen von den Stromabnehmern hervorrufen. Eine exakte Lokalisierung eines ausgefallenen Stromabnehmers (Seiten- und Fahrwerksgenau) kann mit gegenständlichen Verfahren nicht erzielt werden, wohl aber eines Stromabnehmerpaares (zwei Stromabnehmer auf beiden Seiten innerhalb eines Drehgestelles). In Betrieb von Schienenfahrzeugen ist eine exakte Lokalisierung des betroffenen Stromabnehmers nicht erforderlich, eine Warnung an das Fahrpersonal und eine Speicherung dieses Fehlerzustands in der Wagensteuerung ist ausreichend, da der Fehler ohnedies nicht auf freier Strecke behoben werden kann, sondern üblicherweise erst nach Betriebsschluß in einem Ausbesserungswerk behoben wird.

Ist der Stromabnehmer der Meßstelle selbst betroffen, so kühlt die ihm zugeordnete Leitung im Verhältnis zu allen anderen Leitungen aus und es wird eine Temperaturdifferenz und somit ein Stromabnehmerausfall detektiert.

In weiterer Fortbildung der Erfindung empfiehlt es sich, zur Erkennung eines Stromabnehmerausfalls zusätzlich zur Temperaturmessung an den Leitungen von den Stromabnehmern zu einer wagenkastenseitigen Sammelschiene fahrdynamische Parameter auszuwerten. Da der Stromverbrauch eines Schienenfahrzeugs zum überwiegenden Anteil von der Antriebsleistung bestimmt ist, kann beispielsweise in Abhängigkeit von der aktuellen Position des Fahrzeugs auf der Strecke (Steigung oder Gefälle), der aktuellen Beladung (aus der Druckluft Sekundärfederung) und der aktuellen Beschleunigung sowie der Umgebungstemperatur eine erwartete Temperatur der Meßstelle bestimmt werden. Dazu sind ggf. Kalibrierfahrten auf der vorgesehenen Strecke erforderlich. Weicht die gemessene Temperatur der Meßstelle von der erwarteten Temperatur um einen bestimmten Schwellwert ab, so kann daraus auf den Ausfall eines Stromabnehmers geschlossen werden. Wird an der Meßstelle eine höhere Temperatur als erwartet gemessen, so ist ein weiterer (anderer) Stromabnehmer ausgefallen, weicht die Temperatur nach unten ab, so ist der Stromabnehmer der Meßstelle betroffen. Dadurch ist der Vorteil erzielbar, auch bei Schienenfahrzeugen mit mehreren Stromabnehmern eine Stromabnehmerausfallüberwachung mit nur einer Meßstelle je wagenkastenseitiger Sammelschiene eines Zugverbundes realisieren zu können. Solcherart kann der Aufwand an Temperaturfühlern, elektrischen Leitung, Analogeingängen der Wagensteuerung etc. reduziert werden.

Gegenständliches Verfahren ist sowohl bei Fahrzeugen mit links- und rechtsseitigen Stromabnehmern als auch bei Fahrzeugen mit einseitig angeordneten Stromabnehmern einsetzbar.

Das Wirkungsprinzip gegenständlicher Erfindung beruht auf der Erwärmung stromdurchflossener Leiter. Diese Verlustwärme führt zu einer Temperaturerhöhung des Leiters (typischerweise Kupfer oder Aluminium), seiner Isolation sowie der umgebenden Bauteile. Die Isolation ist jeweils für eine bestimmte maximale Temperatur bemessen, welche nicht überschritten werden darf, da dies zu einem Veränderung der mechanischen Eigenschaften der Isolation führen kann wodurch die isolierenden Eigenschaften verändert werden können. In der Auslegung der betreffenden elektrischen Leitungen wird darauf Rücksicht genommen und die Leitungen werden dementsprechend dimensioniert, sodass im normalen Betrieb diese maximale Temperatur nicht auftreten kann. Dabei ist auch die Umgebungstemperatur des Einsatzortes des Schienenfahrzeugs zu berücksichtigen.

Die elektrischen Leitungen von den Stromabnehmern (fahrgestellseitige Stromabnehmer zu "3.Schiene") werden gebräuchlicherweise im Fahrgestellbereich verbunden, sodass nur eine Leitung vom Fahrgestell zum Wagenkasten geführt werden muss. Diese elektrische Leitung muss einen flexiblen Teil aufweisen, welcher die Beweglichkeit des Fahrgestells während des Betriebs nicht behindert. Der weitere Verlauf dieser Leitung im Bereich des Wagenkastens erfolgt in einer metallischen Führung. Diese metallische Führung ist erforderlich, da die genannte elektrische Leitung fahrzeugseitig nicht abgesichert ist. Ein Kurzschluss dieser Leitung mit dem Wagenkasten, welcher Massepotential aufweist wird nur durch die Sicherungseinrichtungen der Speisestelle der 3.Schiene abgesichert, wodurch äußerst hohe Ströme den Wagenkasten im Kurzschlußfall massiv beschädigen würden. Tritt ein Kurzschluss an diesem (unabgesicherten) Teil der Leitung auf, so stellt die metallische Führung sicher, dass ausreichend hohe Ströme fließen können um die Sicherungseinrichtungen der Speisestelle auszulösen. Dazu ist die metallische Führung mit der Fahrzeugmasse zu verbinden. Aufgrund der Erfordernisse, sehr geringe Erdungswiderstände und eine hohe Zuverlässigkeit dieser Masseverbindung gewährleisten zu können, werden die Anschlußpunkte üblicherweise mit der metallischen Führung verschweißt. An diese angeschweißten Anschlußpunkte werden Masseleitungen hohen Querschnitts geschraubt und die Verschraubung gesichert. Diese in der metallischen Führung befindliche elektrische Leitung führt zu einem wagenkastenseitigen Anschlußkasten (Sammelschiene), in welchem die fahrzeugseitigen Sicherungseinrichtungen (Schmelzsicherungen oder Leistungsschalter) vorgesehen sind.

Die genannte metallische Führung umschließt die darin geführte elektrische Leitung eng, die Leitung weist eine ausreichende Beweglichkeit in der Führung auf, es besteht jedoch kein wesentlicher Spalt zwischen der Leitung und der Führung. Dadurch wirkt sich die Erwärmung der Leitung unmittelbar auch auf die metallische Führung auf, welche einen im Wesentlichen identischen Temperaturverlauf wie die darin geführte elektrisch Leitung aufweist. Da die Führung im Untergestell des Wagenkastens eingebaut ist und häufig von weiteren Einbauten im Untergestell umgeben ist, kann durch den Fahrtwind keine bedeutende Kühlung der metallischen Führung erfolgen. Bei einigen Schienenfahrzeugen ist die metallische Führung auch in einem komplett fahrtwindgeschützten Bereich montiert.

Somit ist es möglich, durch Messung der Temperatur der metallischen Führung auf die Temperatur der elektrischen Leitung in dieser Führung zu schließen ohne wesentliche Meßfehler in Kauf nehmen zu müssen. Die Zeitkonstanten des Erwärmungsvorgangs dieser Leitung sind ausreichend lang.

Es ist nicht ohne weiteres möglich, einen Temperatursensor unmittelbar an der elektrischen Leitung anzuordnen, da dies gemäß den Bauvorschriften von Schienenfahrzeugen unzulässig ist. Da auch bei Versagen der Isolation der elektrischen Leitung die Fahrspannung nicht an die Fahrzeugelektronik oder den Wagenkasten gelangen darf, sind entsprechende Temperatursensoren einzusetzen. Diese für den genannten Einsatzzweck geeigneten Temperatursensoren weisen eine Masseverbindung auf, sodass sichergestellt ist, dass im Fall des Versagens der Isolation ausreichende Ströme zur Auslösung der Speiseseitigen Sicherung fließen können.

Werden Temperatursensoren unmittelbar an der elektrischen Leitung angeordnet, so ist eine zusätzliche elektrische Isolierung vorzusehen. Solcherart kann auch bei Versagen der Isolierung der elektrischen Leitung ein Übergreifen der Fahrspannung auf den Temperatursensor und die Fahrzeugsteuerung verhindert werden.

Versagt ein Stromabnehmer, so wird die elektrische Leistung über den, bzw. die verbleibenden Stromabnehmer übertragen, welche dabei höhere elektrische Ströme führen müssen. Dadurch werden die Leitungen von den verbleibenden Stromabnehmern zu der Sammelschiene entsprechend stärker erwärmt und somit auch gegebenenfalls die metallischen Führungen dieser Leitungen. Gemäß einer Ausführungsform der Erfindung werden die Temperaturen der metallischen Führungen ermittelt und wenn die Temperatur einer metallischen Führung einen bestimmten Wert übersteigt ein Signal an die Fahrzeugssteuerung abgegeben.

Eine Ausführungsform der Erfindung sieht vor, dazu einen Thermoschalter einzusetzen, welcher bei einer bestimmten Temperatur schaltet, also eine Temperaturüberschreitung binär anzeigt. Dadurch ist der Vorteil erzielbar, eine besonders einfache und preisgünstige Stromabnehmerausfallerkennung aufbauen zu können, da einerseits Thermoschalter sehr preisgünstig sind, andererseits zur Weiterverarbeitung nur Binäreingänge einer Fahrzeugsteuerung erforderlich sind, wodurch auch die weiterverarbeitende Software (so eine solche eingesetzt wird) vereinfacht wird.

Wird eine analoge Temperaturmessung vorgenommen, so kann durch die Fahrzeugsteuerung ein zeitliches Temperaturprofil der metallischen Führung ermittelt werden und solcherart bereits die Tendenz einer Temperaturerhöhung erkannt werden wodurch eine frühzeitige Warnung erfolgen kann. Dabei sind seitens der Fahrzeugsteuerung analoge Eingänge vorzusehen.

Der Schwellwert der Auslösung einer Warnung, d.h. das Ausgeben eines Signals welches einen Stromabnehmerausfall anzeigt ist mit einem bestimmten Sicherheitsabstand von der maximal zulässigen Temperatur der elektrischen Leitung festzulegen. Typische für diesen Zweck eingesetzte Leitungen weisen zulässige Dauertemperaturen von ca. 90 bis 120 Grad Celsius, bei einer typischen zulässigen kurzzeitigen Spitzentemperatur von 150 Grad Celsius auf.

Befindet sich ein Fahrzeug im Teillastbetrieb (z.B. leere U-Bahn), so ist es möglich, dass dabei bei Ausfall eines Stromabnehmers die Auslösetemperatur der nichtbetroffenen Leitung nicht erreicht wird, das Fahrzeug also zumindest kurzfristig weiterbetrieben werden kann, eine Warnung kann allenfalls unter Einsatz einer analogen Temperaturmessung und Auswertung des zeitlichen Temperaturprofils (der metallischen Führung) erfolgen.

Die Wagensteuerung kann bei Erkennung eines Ausfalls eines Stromabnehmers das Fahrpersonal von diesem Ausfall informieren, beispielsweise durch ein Warnlicht im Fahrerstand oder einer Warnmeldung im Fahrerdisplay, sie kann auch im Fehlerfall die maximal zur Verfügung stehende Antriebsleistung reduzieren, sodass ein betroffenes Fahrzeug bis zu einem geeigneten Reparaturzeitpunkt in Betrieb verbleiben kann, die maximal erreichbare Beschleunigung jedoch reduziert ist.

Die Temperaturbestimmungseinrichtung (Thermoschalter, Thermoelement, Widerstandsthermometer, etc.) ist gemäß einer Ausführungsform der Erfindung an einer Ausformung der metallischen Führung anzuordnen. Es ist vorteilhaft, dazu jene Ausformung einzusetzen, welche zum Anschluss des Erdungskabels (Masseanschluß) vorgesehen ist. Diese Ausformung ist gebräuchlicherweise an die metallische Führung angeschweißt um einen extrem niederohmigen Anschluss gewährleisten zu können und eignet sich auch sehr gut zur Montage einer Temperaturbestimmungseinrichtung. Eine allfällig vorgesehene Isolierung der metallischen Führung muss an der Befestigungsstelle der Temperaturbestimmungseinrichtung entfernt werden.

In weiterer Fortbildung der Erfindung ist es vorteilhaft diese Ausformung, zusammen mit der an ihr montierten Temperaturbestimmungseinrichtung zumindest teilweise mit einem thermisch isolierenden Material einzuhüllen. Dadurch ist der Vorteil erzielbar, eine höhere Genauigkeit der Temperaturbestimmung erreichen zu können, da dadurch die Wärmeabgabe der Ausformung an die Umgebung reduziert wird.

**Kurzbeschreibung der Zeichnungen**

Es zeigen beispielhaft:

> **Fig.1** Energiezuführung eines Schienenfahrzeugs.
> **Fig.2** metallische Führung.
> **Fig.3** Zug mit Stromabnehmerausfallserkennung.
> **Fig.4** Schienenfahrzeug mit Stromabnehmerausfallserkennung.
> **Fig.5** Temperaturverläufe bei einem Stromabnehmerausfall.
> **Fig.6** Temperaturmeßstelle

**Ausführung der Erfindung**

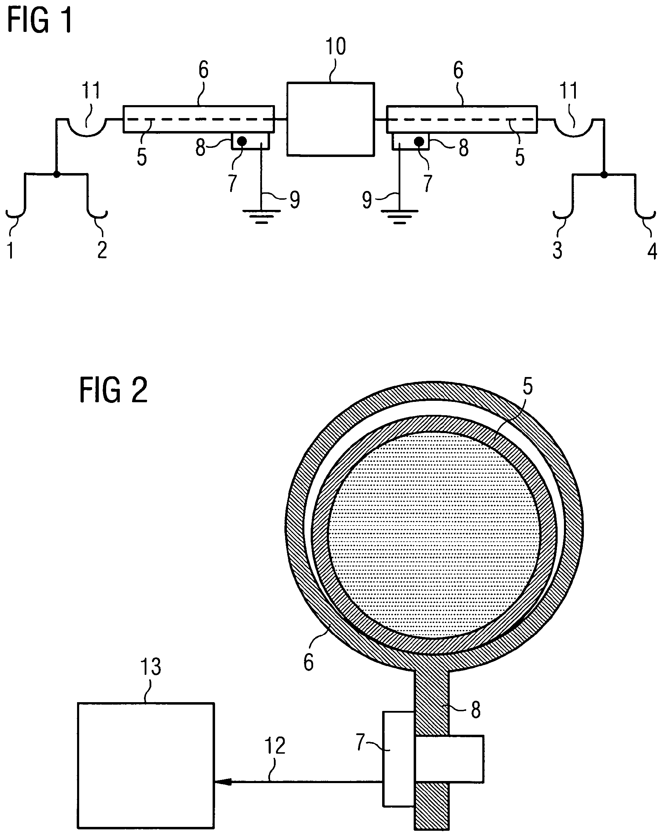

**Fig.1** zeigt beispielhaft und schematisch eine Energiezuführung eines Schienenfahrzeugs. Es ist der prinzipielle Aufbau einer elektrischen Energiezuführung eines Schienenfahrzeugs mit am Fahrwerk angeordneten Stromabnehmern gezeigt. Das Schienenfahrzeug weist zwei Drehgestelle auf, wobei dem ersten Drehgestell ein linksseitiger Stromabnehmer 1 und ein rechtsseitiger Stromabnehmer 2 zugeordnet sind und wobei dem zweiten Drehgestell ein linksseitiger Stromabnehmer 3 und ein rechtsseitiger Stromabnehmer 4 zugeordnet sind. Die zu den Stromabnehmern 1, 2, 3, 4 führenden elektrischen Leitungen werden noch im Bereich des Drehgestells zu einer gemeinsamen Leitung verbunden. Der dazu üblicherweise eingesetzte Verbindungskasten ist in Fig.1 zur Vereinfachung der Darstellung nicht gezeigt. Diese gemeinsame Leitung weist in ihrem weiteren Verlauf jeweils einen flexiblen Abschnitt 11 auf, welcher die Beweglichkeit des Drehgestells sicherstellt. Im weiteren Verlauf ist die elektrische Leitung 5 in einer metallischen Führung 6 geführt. Dieser Leitungsabschnitt ist am, bzw. im Untergestell des Schienenfahrzeugs angeordnet. Die elektrische Leitung 5 ist zu einem Anschlußkasten 10 geführt, welche unter anderem eine Sammelschiene und Sicherungseinrichtungen umfasst. Die metallischen Führungen 6 sind jeweils mit einer Masseleitung 9 mit der Fahrzeugmasse verbunden. Dazu weisen die metallischen Führungen 6 jeweils eine Ausformung 8 auf, die zum Anschluß einer Masseleitung 9 ausgebildet sind. Weiters sind an den Ausformungen 8 jeweils eine Temperaturbestimmungseinrichtung 7 angeordnet, welche die Temperatur der Ausformung 8, bzw. der metallischen Führung 6 erfassen.

**Fig.2** zeigt beispielhaft und schematisch eine metallische Führung mit einer Temperaturbestimmungseinrichtung. Es ist ein Querschnitt einer metallischen Führung 6 im Bereich einer Ausformung 8 dargestellt. In der metallischen Führung 8 ist eine elektrische Leitung 5 geführt, welche einen elektrischen Leiter und eine diesen elektrischen Leiter einhüllende Isolierung aufweist. Die metallische Führung 6 ist rohrförmig ausgeführt, wobei der Innendurchmesser der metallischen Führung nur unwesentlich größer ist als der Außendurchmesser der elektrischen Leitung 5. Diese Durchmesserdifferenz ist so bemessen, dass eine Montage der elektrischen Leitung 5 möglich ist. Die geringe Durchmesserdifferenz stellt auch einen guten Wärmeübergang von der elektrischen Leitung 5 in die metallische Führung 6 sicher. Die metallische Führung weist eine plattenförmige Ausformung 8 auf, welche einstückig mit der metallischen Führung 6 ausgeführt ist. Im Allgemeinen ist die Ausformung 8 mit der metallischen Führung 6 verschweißt. Die Ausformung 8 weist Befestigungsmittel zur Montage einer Temperaturbestimmungseinrichtung 7 auf. In gezeigtem Ausführungsbeispiel ist dieses Befestigungsmittel als Bohrung ausgeführt. Die Temperaturbestimmungseinrichtung 7 ist elektrisch mit einer Wagensteuerung 13 verbunden und gibt ein Signal 12 an diese Wagensteuerung ab, welche von der ermittelten Temperatur der metallischen Führung 6 bestimmt ist. Weiters weist die Ausformung 8 einen Anschluß für eine Masseleitung 9 auf, zur Vereinfachung ist dieser Anschluß in Fig. 2 nicht dargestellt.

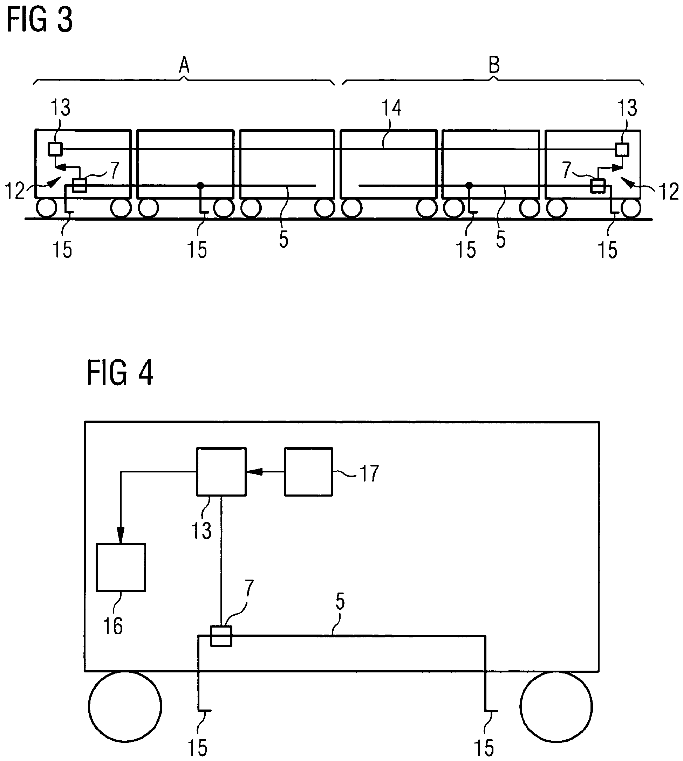

**Fig.3** zeigt beispielhaft und schematisch einen Zug mit Stromabnehmerausfallserkennung. Es ist ein Verband aus sechs Schienenfahrzeugen dargestellt, welcher aus zwei Teilzügen A, B zusammengestellt ist, welche jeweils drei Schienenfahrzeuge umfassen. Ein solcher Schienenfahrzeugverbund ist typisch für die bei U-Bahnen oder ähnlichen Nahverkehrsbahnen eingesetzten Schienenfahrzeugverbunde. Dabei sind beide Teilzüge A, B jeweils auch getrennt einsetzbar, und im Wesentlichen identisch. In gezeigtem Ausführungsbeispiel weisen jeder der Teilzüge A, B zwei Stromabnehmer 15 auf, welche bei Betrieb in Kontakt mit einer Stromschiene sind. Jeder Teilzug A, B ist mit einer elektrischen Leitung 5 ausgestattet, welche die Fahrspannung von den Stromabnehmern 15 zu den Antriebsstromrichtern leitet. Diese elektrische Leitung 5 stellt eine wagenkastenseitige Sammelschiene dar. Es besteht keine Verbindung der elektrischen Leitungen 5 der beiden Teilzüge A, B. Jeder der beiden Teilzüge ist mit einer Temperaturbestimmungseinrichtung 7 ausgestattet, welche die Temperatur der elektrischen Verbindung von einem Stromabnehmer 15 zu der elektrischen Leitung 5 bestimmt und ein dieser Temperatur entsprechendes elektrisches Signal 12 an die Wagensteuerung 13 des jeweiligen Zugteils A, B leitet. Die Wagensteuerungen 13 der Zugteile A, B sind untereinander mittels einer Datenverbindung 14 verbunden. Gebräuchlicherweise ist im Fahrbetrieb eine der beiden Wagensteuerungen 13 führend, wobei häufig die in Fahrtrichtung vorne liegende die Zugsteuerungs- und Überwachungsfunktionen ausführt. Die nicht führende Wagensteuerung 13 leitet die ihr zugeleiteten Temperaturmeßwerte an die führende Wagensteuerung 13 über die Datenverbindung 14 weiter. Im Fahrbetrieb nehmen beide Teilzüge A, B im Wesentlichen dieselben elektrischen Leistungen auf, sodass die Temperaturbestimmungseinrichtungen 7 der Teilzüge A, B jeweils dieselben Temperaturen ermitteln.

Fällt einer der Stromabnehmer 15 aus, so muß die Stromversorgung des betroffenen Zugteils durch die verbleibenden Stromabnehmer 15 erfolgen, welche dabei elektrisch und thermisch höher belastet werden. Dadurch treten an den Temperaturbestimmungseinrichtungen 7 der Teilzüge A, B unterschiedliche Temperaturen auf. In Abhängigkeit vom jeweils betroffenen Stromabnehmer 15 ergibt sich das Vorzeichen dieser Temperaturdifferenz. Die jeweils führende Wagensteuerung 13 bestimmt diese Temperaturdifferenz und löst bei Überschreiten eines vorbestimmten Schwellwerts eine Warnung aus. Weiters kann die Wagensteuerung 13 dabei auch Fahrzeugparameter, beispielsweise die maximal mögliche Antriebsleitung beeinflussen und somit die verbliebenen Stromabnehmer 15 vor Überlast schützen.

**Fig.4** zeigt beispielhaft und schematisch ein Schienenfahrzeug mit Stromabnehmerausfallserkennung. Es ist ein Schienenfahrzeug mit zwei Stromabnehmern 15 dargestellt, welche mit einer gemeinsamen elektrischen Leitung 5 verbunden sind, diese elektrische Leitung 5 ist eine wagenkastenseitige Sammelschiene aus welcher die elektrischen Verbraucher des Schienenfahrzeugs gespeist werden. Eine Temperaturbestimmungseinrichtung 7 ermittelt die Temperatur einer Leitung von einem der Stromabnehmer 15 zu der elektrischen Leitung 5 und übermittelt ein dieser Temperatur entsprechendes Signal 12 an eine Wagensteuerung 13. Das in Fig.4 dargestellte Ausführungsbeispiel zeigt eine Stromabnehmerausfallserkennung unter Einsatz einer einzigen Temperaturbestimmungseinrichtung 7. Eine Fahrzeugparametererfassung 17 ermittelt die für den Fahrbetrieb und die Stromabnehmerausfallserkennung wesentlichen dynamischen Fahrzeugparameter wie den aktuellen Beladungszustand, die aktuelle Beschleunigung, die Umgebungstemperatur, die Position auf der Fahrstrecke und somit die Aktuelle Steigung bzw. das Gefälle und leitet diese Daten an die Wagensteuerung 13. Aus diesen Daten und der gemessenen Temperatur der Leitung von einem der Stromabnehmer 15 zu der elektrischen Leitung 5 ermittelt die Wagensteuerung 13 durch Vergleich der gemessenen Temperatur zu einer von der Wagensteuerung 13 errechneten Temperatur einen Stromabnehmerausfall. Weicht die gemessene Temperatur mehr als einen vorbestimmten Schwellwert von der errechneten Temperatur ab, so gibt die Wagensteuerung 13 ein Signal an ein Fahrerinformationssystem ab und modifiziert gegebenenfalls bestimmte Fahrzeugparameter, beispielsweise die maximale Antriebsleistung. Die errechnete Temperatur wird von der Wagensteuerung 13 aus den von der Fahrzeugparametererfassung 17 ermittelten dynamischen Parametern bestimmt. Gezeigtes Ausführungsbeispiel ermöglicht die Erkennung eines Stromabnehmerausfalls auch bei einem Einzelfahrzeug, welches nicht in einem Zugverband eingesetzt wird. Weiters ermöglicht diese Ausführung auch das Erkennen des jeweils ausgefallenen Stromabnehmers, da das Vorzeichen der Temperaturdifferenz dieser Erkennung ermöglicht. Wird an der Temperaturbestimmungseinrichtung 7 eine niedrigere Temperatur als die errechnete Temperatur gemessen, so ist der der Temperaturbestimmungseinrichtung 7 zugeordnete Stromabnehmer 15 ausgefallen. Wird an der Temperaturbestimmungseinrichtung 7 eine höhere Temperatur als die errechnete Temperatur gemessen, so ist der der Temperaturbestimmungseinrichtung 7 abgewandte Stromabnehmer 15 ausgefallen, da solcherart der zweite Stromabnehmer 15 die gesamte elektrische Leistung übertragen muß und sich stärker erwärmt.

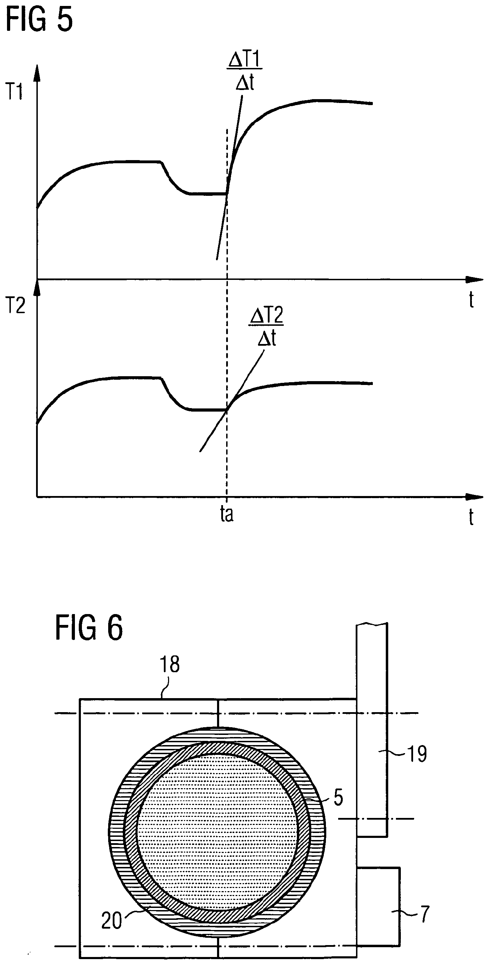

**Fig.5** zeigt beispielhaft und schematisch die Temperaturverläufe an den Meßstellen bei einem Stromabnehmerausfall. Es sind die Temperaturverläufe gezeigt, wie sie bei einer Anordnung der Meßstellen gemäß dem Ausführungsbeispiel aus Fig.3 auftreten können. Die Grafik umfasst die Temperaturverläufe der ersten Meßstelle T1 des ersten Zugteils A und der zweiten Meßstelle T2 des zweiten Zugteils B. Die waagrechte Achse beschreibt jeweils die Zeit t. Es ist ein beispielhafter Fahrbetrieb angenommen, bei welchem die Temperaturverläufe T1, T2 ausgehend von einer Grundtemperatur einen Anstieg bis zu einer bestimmten Temperatur aufweisen. Anschließen ist ein Stillstand des Fahrzeugs angenommen, wodurch die Temperaturen an den Meßstellen wieder absinken. Dabei, bzw. bei einem darauffolgenden Beschleunigungsvorgang fällt ein Stromabnehmer 15 des mittleren Wagens des ersten Teilzugs A zum Ausfallzeitpunkt ta aus. Der Temperaturverlauf T2 der Meßstelle des zweiten Teilzugs B ist davon unbeeinflußt und zeigt somit im weiteren Verlauf einen Anstieg. Der Temperaturverlauf T1 der Meßstelle des ersten Teilzugs A zeigt einen wesentlich steileren Anstieg und erreicht einen höheren Temperaturwert als jene der Meßstelle des zweiten Teilzugs B da die gesamte elektrische Leistung nach den Ausfallszeitpunkt ta über das der Meßstelle des ersten Teilzugs A fließt und diese Leitung stärker erwärmt. Neben der Detektion der Temperaturunterschiede, die sich aufgrund der thermischen Zeitkonstanten der elektrischen Leitung erst nach einiger Zeit einstellen, können auch die Temperaturanstiegsgeschwindigkeiten $\frac{\Delta T1}{\Delta t}$ und $\frac{\Delta T2}{\Delta t}$ ermittelt und zur Ausfallserkennung herangezogen werden. Solcherart kann ein Ausfall noch vor dem Erreichen eines bestimmten Temperaturdifferenzschwellwerts erkannt werden.

**Fig.6** zeigt beispielhaft und schematisch eine Temperaturmeßstelle an einer elektrischen Leitung. Es ist eine metallische Halterung 18 dargestellt, welche mittels eines Bügels 19 mit Bauteilen des Schienenfahrzeugs, bzw. mit Bauteilen eines sogenannten Antriebscontainers verbunden ist. An der Halterung 18 ist eine Temperaturbestimmungseinrichtung 7 so angeordnet, daß eine Wärmeleitung zwischen diesen Bauteilen erfolgen kann. Die Halterung 18 weist eine kreisförmige Ausnehmung auf und ist geteilt, sodass eine isolierte elektrische Leitung 5 eingebracht werden kann und die Halterung 18 daraufhin geschlossen werden kann. Solcherart ist eine besonders gute Wärmeleitung zwischen der elektrischen Leitung 5 und der Halterung 18 und somit auch zu der Temperaturbestimmungseinrichtung 7 sichergestellt. Die elektrische Leitung 5 ist in gezeigtem Ausführungsbeispiel normal zur Zeichnungsebene angeordnet und somit geschnitten dargestellt. Vereinfacht kann die Halterung 18 auch ungeteilt ausgeführt werden und die elektrische Leitung 5 mittels geeigneter Hilfsmittel, beispielsweise Kabelbindern an der Halterung 8 befestigt werden. Eine Isolierung 20 ist in der Ausnehmung der Halterung 18 angeordnet und schützt auch bei einem Versagen der Isolierung der elektrischen Leitung 5 das Fahrzeug vor der Fahrspannung.

**Liste der Bezeichnungen**

| 1 | Stromabnehmer, erstes Drehgestell links |
| 2 | Stromabnehmer, erstes Drehgestell rechts |
| 3 | Stromabnehmer, zweites Drehgestell links |
| 4 | Stromabnehmer, zweites Drehgestell rechts |
| 5 | elektrische Leitung |
| 6 | metallische Führung |
| 7 | Temperaturbestimmungseinrichtung |
| 8 | Ausformung |
| 9 | Masseleitung |
| 10 | Anschlußkasten |
| 11 | flexibler Abschnitt der elektrischen Leitung |
| 12 | Signal |
| 13 | Wagensteuerung |
| 14 | Datenverbindung |
| 15 | Stromabnehmer |
| 16 | Fahrerinformationssystem |
| 17 | Fahrzeugparametererfassung |
| 18 | Halterung |
| 19 | Bügel |
| 20 | Isolierung |
| A | Erster Teilzug |
| B | Zweiter Teilzug |
| T1 | Temperaturverlauf erste Meßstelle |
| T2 | Temperaturverlauf zweite Meßstelle |
| ta | Ausfallszeitpunkt |
| t | Zeit |

**Patentansprüche**

1. Verfahren zur Stromabnehmerausfallüberwachung in einem Schienenfahrzeugverbund aus mindestens einem Schienenfahrzeug, umfassend mehrere Stromabnehmer und elektrische Leitungen von den Stromabnehmern zu einer wagenkastenseitigen Sammelschiene, wobei die Oberflächentemperatur mindestens einer elektrischen Leitung von einem Stromabnehmer zu der wagenkastenseitigen Sammelschiene ermittelt wird, und wobei ein dieser Temperatur entsprechendes elektrisches Signal an eine Wagensteuerung geleitet wird **dadurch gekennzeichnet, dass**

   - die Wagensteuerung die Temperaturen der ihr zugeordneten Meßstellen vergleicht,
   - eine Ausfall eines Stromabnehmers durch das Auftreten einer Temperaturdifferenz zwischen den Meßstellen des betroffenen zu den nichtbetroffenen Stromabnehmern oder durch das Auftreten einer unterschiedlichen Temperaturänderungsgeschwindigkeit an den Meßstellen erkannt wird.

2. Verfahren zur Stromabnehmerausfallüberwachung nach Anspruch 1, **dadurch gekennzeichnet, dass** der Schienenfahrzeugverbund aus zwei Teilzügen besteht, welche jeweils eine wagenkastenseitige Sammelschiene aufweisen und wobei je Teilzug die Temperatur der elektrischen Leitung eines einzigen Stromabnehmers zu der wagenkastenseitigen Sammelschiene ermittelt wird und bei Ausfall eines Stromabnehmers, Ausfall eines Stromabnehmers durch das Auftreten einer Temperaturdifferenz zwischen den Meßstellen des betroffenen zu dem nichtbetroffenen Teilzug erkannt wird.

3. Verfahren zur Stromabnehmerausfallüberwachung nach Anspruch 1, **dadurch gekennzeichnet, dass** die Wagensteuerung zusätzlich fahrdynamische Parameter auswertet und zur Erkennung eines Stromabnehmerausfalls einsetzt.

4. Verfahren zur Stromabnehmerausfallüberwachung nach Anspruch 3, **dadurch gekennzeichnet, dass** als fahrdynamischer Parameter wenigstens einer der Werte:

   - aktuelle Fahrzeugbeladung,
   - aktuelle Position des Fahrzeugs auf der Strecke,
   - aktuelle Beschleunigung

   eingesetzt wird.

5. Verfahren zur Stromabnehmerausfallüberwachung nach einem der Ansprüche 1 bis 3, **dadurch gekennzeichnet, dass** bei Überschreiten einer bestimmten Oberflächentemperatur einer elektrischen Leitung von einem Stromabnehmer zu der wagenkastenseitigen Sammelschiene ein Warnsignal ausgegeben wird.

**6.** Schienenfahrzeug, eingerichtet für die Durchführung eines Verfahrens zur Stromabnehmerausfallüberwachung nach einem der Ansprüche 1 bis 5, in welchem jedes Fahrwerk einen links- (1, 3) und einen rechtsseitigen (2, 4) Stromabnehmer umfasst und wobei die gemeinsame elektrische Leitung (5) zwischen den Stromabnehmern (1, 2, 3, 4) und einer wagenkastenseitigen Sammelschiene in jeweils einer metallischen Führung (6) geführt ist, **dadurch gekennzeichnet, dass** an jeder metallischen Führung (6) mindestens eine Temperaturbestimmungseinrichtung (7) vorgesehen ist, welche die Temperatur der ihr zugeordneten metallischen Führung (6) ermittelt und ein der Temperatur entsprechendes Signal (12) an eine Wagensteuerung (13) leitet.

**7.** Schienenfahrzeug, eingerichtet für die Durchführung eines Verfahrens zur Stromabnehmerausfallüberwachung nach einem der Ansprüche 1 bis 5, **dadurch gekennzeichnet, dass** die Temperaturbestimmungseinrichtung (7) ein Thermoschalter ist, welcher bei Überschreitung einer bestimmten Temperatur ein Signal (12) an die Wagensteuerung leitet.

**Claims**

**1.** Method for monitoring current collector failure in a rail vehicle consist made up of at least one rail vehicle, comprising a plurality of current collectors and electric cables from the current collectors to a carriage-body-mounted busbar, wherein the surface temperature of at least one electric cable from a current collector to the carriage-body-mounted busbar is determined, and wherein an electrical signal corresponding to this temperature is transmitted to a carriage controller,
**characterised in that**

- the carriage controller compares the temperatures of the measuring points assigned to it,
- failure of a current collector is detected by the occurrence of a temperature difference between the measuring points of the affected and the unaffected current collectors or by the occurrence of a differential rate of temperature rise at the measuring points.

**2.** Method for monitoring current collector failure according to claim 1, **characterised in that** the rail vehicle consist is made of two sets each having a carriage-body mounted busbar and wherein the temperature of the electric cable of a single current collector to the carriage-body mounted busbar is determined for each set and, if a current collector fails, failure of a current collector is detected by the occurrence of a temperature difference between the measuring points of the affected and the unaffected set.

**3.** Method for monitoring current collector failure according to claim 1, **characterised in that** the carriage controller additionally analyses running dynamics parameters and uses them to detect current collector failure.

**4.** Method for monitoring current collector failure according to claim 3, **characterised in that** at least one of the values:

- current vehicle loading,
- current position of the vehicle on the track,
- current acceleration

is used as a running dynamics parameter.

**5.** Method for monitoring current collector failure according to one of claims 1 to 3, **characterised in that** a warning signal is output if a particular surface temperature of an electric cable from a current collector to the carriage-body mounted busbar is exceeded.

**6.** Rail vehicle, set up to carry out a method for monitoring current collector failure according to one of claims 1 to 5, in which each wheel truck comprises a left- (1, 3) and a right-side (2, 4) current collector and wherein the common electric cable (5) between the current collectors (1, 2, 3, 4) and a carriage-body mounted busbar is routed through a metal guide (6) in each case,
**characterised in that** on each metal guide (6) at least one temperature determining device (7) is provided which determines the temperature of the metal guide (6) assigned to it and transmits a signal (12) corresponding to the temperature to a carriage controller (13).

**7.** Rail vehicle, set up to carry out a method for monitoring current collector failure according to one of claims 1 to 5, **characterised in that** the temperature determining device (7) is a thermostatic switch which transmits a signal (12) to the carriage controller if a particular temperature is exceeded.

**Revendications**

**1.** Procédé de détection de défaillance de pantographes dans une rame de véhicule(s) ferroviaire(s) composée d'au moins un véhicule ferroviaire et comprenant plusieurs pantographes et des lignes électriques entre les pantographes et une barre collectrice du côté caisse, selon lequel la température superficielle d'au moins une ligne électrique entre un pantographe et la barre collectrice du côté caisse est déterminée, et un signal électrique correspondant à cette température est envoyé à un système de commande de voiture,
**caractérisé en ce que** :

- le système de commande de voiture compare les températures des points de mesure qui lui sont affectés, et
- une défaillance d'un pantographe est détectée par l'apparition d'une différence de température entre les points de mesure d'un pantographe concerné par rapport aux autres pantographes ou par l'apparition d'une vitesse de variation de température différente aux points de mesure.

2. Procédé de détection de défaillance de pantographes selon la revendication 1, **caractérisé en ce que** la rame de véhicule(s) ferroviaire(s) est composée de deux trains partiels, qui comportent chacun une barre collectrice du côté caisse et selon lequel la température de la ligne électrique entre un pantographe individuel et la barre collectrice du côté caisse est déterminée pour chaque train partiel et en cas de défaillance d'un pantographe, celle-ci est détectée par l'apparition d'une différence de température entre les points de mesure du train partiel concerné par rapport à l'autre train partiel.

3. Procédé de détection de défaillance de pantographes selon la revendication 1, **caractérisé en ce que** le système de commande de voiture analyse en outre des paramètres dynamiques de roulage et les utilise pour détecter une défaillance des pantographes.

4. Procédé de détection de défaillance de pantographes selon la revendication 3, **caractérisé en ce qu'**en tant que paramètres dynamiques de roulage, on utilise au moins une des valeurs suivantes :

- charge courante du véhicule,
- position courante du véhicule sur la voie,
- accélération courante.

5. Procédé de détection de défaillance de pantographes selon l'une quelconque des revendications 1 à 3, **caractérisé en ce qu'**en cas de dépassement d'une température superficielle déterminée d'une ligne électrique entre un pantographe et la barre collectrice côté caisse, un signal d'avertissement est émis.

6. Véhicule ferroviaire agencé pour mettre en oeuvre un procédé de détection de défaillance de pantographes selon l'une quelconque des revendications 1 à 5, dans lequel chaque train de roulement comprend un pantographe du côté gauche (1, 3) et un pantographe du côté droit (2, 4) et dans lequel la ligne électrique commune (5) entre les pantographes (1, 2, 3, 4) et une barre collectrice du côté caisse est guidée à chaque fois dans un guide métallique (6), **caractérisé en ce qu'**au moins un dispositif de mesure de température (7) est disposé sur chaque guide métallique (6), lequel dispositif mesure la température du guide métallique (6) qui lui est associé et délivre un signal correspondant à la température (12) au système de commande de voiture (13).

7. Véhicule ferroviaire agencé pour mettre en oeuvre un procédé de détection de défaillance de pantographes selon l'une quelconque des revendications 1 à 5, **caractérisé en ce que** le dispositif de mesure de température (7) est un thermorupteur qui, en cas de dépassement d'une température déterminée, délivre un signal (12) au système de commande de voiture.

## FIG 1

## FIG 2

## FIG 3

## FIG 4

## FIG 5

## FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• GB 2476497 A